Europäisches Patentamt

European Patent Office

Office européen des brevets

(11) Numéro de publication: **0 564 571 B1**

(12) **FASCICULE DE BREVET EUROPEEN**

(45) Date de publication de fascicule du brevet: **15.03.95**    (51) Int. Cl.6: **D06M 10/00**, D06M 10/10, C08J 5/06

(21) Numéro de dépôt: **92903489.0**

(22) Date de dépôt: **20.12.91**

(86) Numéro de dépôt internationale : **PCT/FR91/01052**

(87) Numéro de publication internationale : **WO 92/12285 (23.07.92 92/19)**

(54) **TRAITEMENT PAR PLASMA D'UN MONOFILAMENT ARAMIDE.**

(30) Priorité: **27.12.90 FR 9016597**

(43) Date de publication de la demande: **13.10.93 Bulletin 93/41**

(45) Mention de la délivrance du brevet: **15.03.95 Bulletin 95/11**

(84) Etats contractants désignés: **AT BE CH DE ES FR GB IT LI LU SE**

(56) Documents cités:
**EP-A- 6 275**
**EP-A- 168 131**
**EP-A- 172 057**
**US-A- 4 469 748**

(73) Titulaire: **COMPAGNIE GENERALE DES ETA- BLISSEMENTS MICHELIN-MICHELIN & CIE 12, cours Sablon F-63040 Clermont-Ferrand Cédex (FR)**

(72) Inventeur: **BERNARD, Denis 4, rue du Tour-de-Ville F-63350 Saint-Laure (FR)**
Inventeur: **CORNILLON, Jean-Luc 400 Barley Mill Drive Greer, SC 29651 (US)**

(74) Mandataire: **Doussaint, Jean-Marie MICHELIN & CIE Service K. Brevets 23, Place des Carmes F-63040 Clermont-Ferrand Cedex (FR)**

EP 0 564 571 B1

Rank Xerox (UK) Business Services
(3.10/3.09/3.3.3)

## Description

L'invention concerne les fibres de polyamides aromatiques tels qu'au moins 85 % des liaisons amides (-CO-NH-) soient reliées directement à deux noyaux aromatiques, ces fibres étant couramment appelées "aramides".

L'invention concerne plus particulièrement le collage des fibres aramides à des compositions de caoutchouc.

Il est connu d'améliorer les propriétés d'adhésion de telles fibres en les traitant à l'aide d'un plasma, comme décrit par exemple dans les demandes de brevet EP-A-0006275 et EP-A-0168131.

Le document EP-A-0006275 décrit un procédé dans lequel on fait passer des fibres aramides dans une zone sous pression réduite où l'on génère un plasma à l'aide d'un champ électrique à haute fréquence produit par un solénoïde disposé autour de cette zone. Le procédé décrit dans le document EP-A-0168131 consiste à traiter des fibres aramides avec un plasma gazeux basse température à pression réduite, et à les imprégner à l'aide d'un adhésif spécifique.

Les fibres concernées par ces documents sont des fibres aramides conventionnelles, c'est-à-dire des fibres constituées d'un très grand nombre de filaments élémentaires, très fins, dont le titre et le diamètre sont de l'ordre de 0,17-0,18 tex et de 12-13 micromètres, respectivement.

La demande PCT/CH90/00155 (WO 91/00381, publiée le 10.01.91), incorporée par référence dans la présente demande, décrit quant à elle des monofilaments aramides ayant à la fois un diamètre important et des caractéristiques mécaniques élevées à l'état brut de filage.

Ces monofilaments sont caractérisés par les relations suivantes :

$1,7 \leq Ti \leq 260$ ;

$40 \leq D \leq 480$ ;

$T \geq 170\text{-}D/3$ ;

$Mi \geq 2000$ ;

Ti étant le titre en tex, D étant le diamètre en $\mu$m (micromètre), T étant la ténacité en cN/tex, Mi étant le module initial en cN/tex ;

Le but de l'invention est de proposer un traitement permettant d'obtenir une bonne adhésion de ces monofilaments vis-à-vis des compositions de caoutchouc.

En conséquence, le procédé conforme à l'invention pour traiter au moins une fibre aramide de façon à favoriser son adhésion à du caoutchouc est caractérisé par les points suivants :

a) on utilise au moins un monofilament vérifiant les relations suivantes :

$1,7 \leq Ti \leq 260$ ;

$40 \leq D \leq 480$ ;

$T \geq 170\text{-}D/3$ ;

$Mi \geq 2000$ ;

Ti étant le titre en tex, D étant le diamètre en $\mu$m (micromètre), T étant la ténacité en cN/tex, Mi étant le module initial en cN/tex ;

b) on soumet ce monofilament à un traitement de surface par plasma de telle sorte que le monofilament ait une mouillabilité par l'eau vérifiant la relation $W_{SL} \geq 120$

$W_{SL}$ étant le travail réversible d'adhésion solide-liquide exprimé en mJ/m$^2$.

De préférence le monofilament ainsi traité est ensuite soumis à un traitement d'adhérisation utilisant deux bains d'enduction successifs, avant d'être mis au contact d'une composition de caoutchouc.

L'invention concerne également un monofilament aramide, caractérisé par les relations suivantes :

$1,7 \leq Ti \leq 260$ ;

$40 \leq D \leq 480$ ;

$T \geq 170\text{-}D/3$ ;

$Mi \geq 2000$ ;

$W_{SL} \geq 120$;

Ti étant le titre en tex, D étant le diamètre en $\mu$m (micromètre), T étant la ténacité en cN/tex, Mi étant le module initial en cN/tex ; $W_{SL}$ étant le travail réversible d'adhésion solide-liquide exprimé en mJ/m$^2$.

Le monofilament conforme à l'invention peut être utilisé soit seul, soit sous forme d'assemblages, par exemple pour renforcer des articles, notamment des articles en matières plastiques et/ou en caoutchoucs, de tels articles étant par exemple des courroies, des tuyaux, des enveloppes de pneumatiques, l'invention concernant également ces assemblages et ces articles ainsi renforcés.

L'invention sera aisément comprise à l'aide des exemples qui suivent.

## I - **Détermination des caractéristiques**

1 - Conditionnement

Par conditionnement on entend dans cette description le traitement des monofilaments et assemblages selon la norme d'Allemagne Fédérale DIN 53 802-20/65 de juillet 1979.

2 - Titre

Le titre des monofilaments et assemblages est déterminé selon la norme d'Allemagne Fédérale DIN 53 830 de juin 1965, les produits ayant au préalable subi un conditionnement.

La mesure est effectuée par pesée d'au moins trois échantillons, chacun correspondant à une longueur de 50 m lorsqu'il s'agit d'un monofilament, ou à une longueur de 5 m lorsqu'il s'agit d'un assemblage. Le titre est exprimé en tex. Il est référencé Ti pour les monofilaments.

3 - Diamètre

Le diamètre des monofilaments est déterminé par le calcul à partir du titre des monofilaments et de leur masse volumique, selon la formule :

$$D = 2 \times 10^{1,5}(Ti/\pi\rho)^{1/2}$$

D représentant le diamètre des monofilaments en $\mu$m, Ti représentant le titre en tex, et $\rho$ représentant la masse volumique en g/cm³.

Le diamètre des assemblages est mesuré selon le procédé suivant. L'assemblage est sous tension, cette tension est comprise entre 0,9 fois et 1,1 fois la prétension standard qui est de 0,5 cN/tex. L'assemblage coupe un faisceau de lumière parallèle. L'ombre portée sur une barrette de diodes photoréceptrices est mesurée instantanément. Le résultat d'une mesure est la largeur moyenne de l'ombre, déterminée en 900 points sur 50 cm d'assemblage. Le diamètre de l'assemblage est calculé en faisant la moyenne de quatre mesures, et il est exprimé en $\mu$m.

4 - Propriétés dynamométriques

Les propriétés dynamométriques des monofilaments et assemblages sont mesurées à l'aide d'une machine de traction Zwick GmbH & Co (Allemagne Fédérale) de type 1435 ou 1445, correspondant aux normes d'Allemagne Fédérale DIN 51 220 d'octobre 1976, DIN 51 221 d'août 1976 et DIN 51 223 de décembre 1977 selon le mode opératoire décrit dans la norme d'Allemagne Fédérale DIN 53 834 de février 1976. Les monofilaments et assemblages sont tractionnés sur une longueur initiale de 400 mm.

On détermine ainsi les propriétés suivantes : ténacité, module initial, module sécant, allongement à la rupture. La ténacité et les modules d'extension sont exprimés en cN/tex (centinewton par tex). L'allongement à la rupture est exprimé en %.

- La ténacité est référencée T pour les monofilaments.
- Le module initial Mi est défini comme la pente de la partie linéaire de la courbe contrainte-déformation qui intervient juste après la prétension standard de 0,5 cN/tex. Ce module Mi est mesuré pour les monofilaments.
- Le module sécant $M_a$ est calculé pour les assemblages selon la relation :

$$M_a = 400 \times \frac{F_1 - F_2}{(Ti)_a}$$

avec

$F_1$ : force à laquelle est soumis l'assemblage pour un allongement de 0,35 % ;

$F_2$ : force à laquelle est soumis l'assemblage pour un allongement de 0,10 % ;

$(Ti)_a$ : titre de l'assemblage.

- L'allongement à la rupture est noté Ar pour les monofilaments.

Toutes les propriétés dynamométriques sont déterminées en faisant la moyenne de dix mesures.

5 - Masse volumique

On mesure les masses volumiques $\rho$ des monofilaments en utilisant la technique du tube à gradient de masse volumique pour matières plastiques spécifiée dans la norme ASTM D1505-68 (réapprouvée en 1975), méthode C en utilisant un mélange de 1,1,2-trichlorotrifluoroéthane et de 1,1,1-trichloroéthane comme système liquide pour le tube à gradient de masse volumique.

Les échantillons utilisés sont de courts tronçons d'environ 2 cm de monofilaments noués de manière non serrée. Avant mesure, ils sont immergés deux heures dans la composante du système liquide qui possède la masse volumique la plus faible. Ensuite ils demeurent 12 heures dans ledit tube avant d'être évalués. On veille particulièrement à éviter la rétention de bulles d'air à la surface des monofilaments.

On détermine la masse volumique en $g/cm^3$ de 2 échantillons par monofilament, et on rapporte la valeur moyenne avec 4 chiffres significatifs.

6 - Viscosité inhérente

La viscosité inhérente (V.I.) du polymère est exprimée en décilitre par gramme et définie par l'équation suivante :

$$V.I. = (1/C) \, Ln \, (t_1/to)$$

où

- C est la concentration de la solution de polymère (0,5 g de polymère dans 100 $cm^3$ de solvant). Le solvant est de l'acide sulfurique concentré à 96 %.
- Ln est le logarithme népérien.
- $t_1$ et to représentent le temps d'écoulement de la solution de polymère et du solvant pur, respectivement, à 30 ± 0,1 °C dans un viscosimètre à capillaire de type Ubbelohde.

7 - Caractéristiques optiques

L'anisotropie optique des compositions de filage, à l'état fondu et au repos, est observée à l'aide d'un microscope de polarisation du type Olympus BH2, équipé d'une platine chauffante.

8 - Mouillabilité

Le principe de la mesure consiste à déterminer la variation de force que subit un échantillon de monofilament extrait d'un assemblage étudié lors de son immersion dans de l'eau. La variation de masse $\Delta M$ mesurée lors de l'immersion dans le liquide peut s'écrire :

$$\Delta M = \frac{\gamma_{LV} \times P \times \cos\theta}{g}$$

$\gamma_{LV}$ étant l'énergie superficielle de l'eau, P étant le périmètre de l'échantillon, g étant l'accélération de la pesanteur, $\theta$ étant l'angle de contact liquide/solide. Le périmètre P est mesuré de façon connue en plongeant l'échantillon dans une solution mouillant parfaitement l'échantillon, $\cos\theta$ étant alors égal à 1.

Le principe de la mesure est le suivant. On suspend l'échantillon verticalement à une électrobalance. On approche de cet échantillon un récipient rempli d'eau et on mesure la variation de masse $\Delta M$, à partir du contact de l'eau avec l'échantillon, lors de la montée du récipient, en fonction de la profondeur d'immersion. On obtient ainsi une courbe, et on extrapole la valeur de $\Delta M$ à une profondeur d'immersion nulle.

L'énergie réversible d'adhésion solide/liquide est donnée par la relation :

$$W_{SL} = \gamma_{LV} \times (1 + \cos\theta)$$

Cette énergie est représentative de la polarité de la surface des fibres.

9 - Mesures d'adhésion

Les assemblages sont insérés entre deux couches de mélanges de caoutchouc de telle sorte que les assemblages soient disposés dans un plan, en formant des boucles en U dont les branches (brins) sont parallèles, la partie incurvée des U étant disposée à l'extérieur des couches de caoutchouc.

Les mélanges de caoutchouc ont la composition suivante (parties en poids) :

4

| Caoutchouc naturel | 50 |
|---|---|
| SBR | 30 |
| PBR | 20 |
| Noir | 50 |
| ZnO | 5 |
| Acide stéarique | 1 |
| antioxydant | 1 |
| Soufre | 2 |
| Accélérateur | 1 |
| SBR : caoutchouc copolymère styrène-butadiène ; | |
| PBR : caoutchouc polybutadiène ; | |
| Antioxydant : Santoflex ®13 de la société Monsanto ; | |
| Accélérateur : type sulfénamide. | |

Les éprouvettes ainsi obtenues sont disposées dans un moule et vulcanisées à 160°C pendant 15 minutes sous une pression de 15 daN/cm$^2$.

On caractérise l'adhésion par la mesure de la force nécessaire pour arracher les boucles de la composition de caoutchouc, la mesure d'arrachement est effectuée à 20°C et avec une vitesse de traction de 100 mm/min. Cette force est déterminée pour chaque boucle, et on calcule en fin d'opération la force moyenne par brin, en faisant une moyenne de 12 mesures.

**II - Réalisation des monofilaments**

Les monofilaments aramides sont préparés conformément au procédé revendiqué dans la demande PCT/CH90/00155 précitée. Les points essentiels de cette préparation sont les suivants :

a) on utilise une solution d'au moins un polyamide aromatique tel qu'au moins 85 % des liaisons amides (-CO-NH-) soient reliées directement à deux noyaux aromatiques, la viscosité inhérente de ce(s) polyamide(s) étant au moins égale à 4,5 dl/g, la concentration de polyamide(s) dans la solution étant d'au moins 20 % en poids, cette composition de filage étant optiquement anisotrope à l'état fondu et au repos ;

b) on extrude cette solution dans une filière, à travers un capillaire dont le diamètre est supérieur à 80 $\mu$m , la température de filage, c'est-à-dire la température de la solution lors de son passage dans le capillaire, étant au plus égale à 105°C ;

c) le jet liquide sortant du capillaire est étiré dans une couche de fluide non coagulante ;

d) on introduit ensuite la veine liquide étirée ainsi obtenue dans un milieu coagulant, le monofilament ainsi en cours de formation restant en contact dynamique avec le milieu coagulant pendant le temps "t", la température du milieu coagulant étant au plus égale à 16°C ;

e) on lave et on sèche le monofilament ; le diamètre D du monofilament sec ainsi terminé et le temps t sont reliés par les relations suivantes :

$t = KD^2$ ; K > 30

t étant exprimé en seconde et D étant exprimé en millimètre.

Les monofilaments préparés selon ce procédé vérifient chacun les relations suivantes :

$1,7 \leq Ti \leq 260$ ;

$40 \leq D \leq 480$ ;

$T \geq 170 - D/3$ ;

$Mi \geq 2000$ ;

Ti étant le titre en tex, D étant le diamètre en $\mu$m (micromètre), T étant la ténacité en cN/tex, Mi étant le module initial en cN/tex, pour ce monofilament.

Divers additifs ou substances tels par exemple que des plastifiants, des lubrifiants, des produits pouvant améliorer l'adhésivité du produit à une matrice de gomme, peuvent éventuellement être incorporés au polymère, à la solution de filage, ou appliqués à la surface du monofilament, au cours des différentes étapes du procédé précédemment décrit.

### III - **Traitements réalisés**

#### 1 - Traitement au plasma

L'appareil de traitement est constitué par un tambour disposé dans une enceinte cylindrique où on peut faire le vide. A l'intérieur de l'enceinte, le tambour est entouré par deux grilles cylindriques servant d'électrodes. Pour chaque traitement au plasma, on enroule l'assemblage autour du tambour sur une seule couche et on applique entre les électrodes une tension variant à haute fréquence de façon à produire un plasma avec un gaz sous faible pression contenu dans l'enceinte.

#### 2 - Traitements d'enduction

Les assemblages, traités ou non avec un plasma, sont soumis à l'un des traitements d'enduction suivants :

##### 1er traitement

Les assemblages passent dans un premier bain dont la composition est la suivante (parties en poids)

| | |
|---|---|
| - Résine époxy (1) | 5,0 |
| - Aérosol (2) | 0,3 |
| - Soude NaOH | 0,3 |
| - Eau | 994,4 |

(1) résine de dénomination DENACOL EX 512 de la Société NAGASE ;
(2) aérosol de dénomination OT de la Société American Cyanamid.

Les assemblages subissent ensuite un traitement thermique entre 210 et 260°C, par exemple à 250°C, pendant un temps compris entre 20 et 120 secondes, par exemple 30 secondes.

On les fait ensuite passer dans un deuxième bain dont la composition est la suivante (parties en poids) :

| | |
|---|---|
| Latex VP 41 % (1) | 319 |
| Ammoniaque | 25 |
| Résine d'encollage | 149 |
| Eau | 507 |

(1) latex terpolymère butadiène/styrène/vinyl pyridine 70/15/15 à une concentration de 41 % dans l'eau.

La résine d'encollage a elle-même la composition suivante (parties en poids) :

| | |
|---|---|
| Résorcine | 65 |
| Soude 1N | 44 |
| Formaldéhyde 31 % | 114 |
| Eau | 777 |

On effectue ensuite un traitement thermique entre 210° et 260°C, par exemple à 250°C, pendant un temps compris entre 20 et 120 secondes, par exemple 30 secondes.

##### 2e traitement

Les assemblages passent dans un premier bain dont la composition est la suivante (parties en poids) :

| | |
|---|---|
| Isocyanate (1) | 3 |
| Chlorure de méthylène | 97 |

(1) Dénomination Desmodur ® R de la Société Bayer.

6

On effectue ensuite un traitement thermique entre 100 et 200°C, par exemple à 170°C pendant un temps compris entre 20 et 120 secondes, par exemple 70 secondes, puis on fait passer les assemblages dans un deuxième bain ayant la même composition que le deuxième bain du 1er traitement, et on effectue un traitement thermique entre 210 et 260°C, par exemple à 250°C pendant un temps compris entre 20 et 120 secondes, par exemple 30 secondes.

## IV - REALISATION DES ESSAIS

On utilise, pour chaque essai un assemblage de monofilaments aramides préparés conformément au chapitre II. Les assemblages sont des câblés qui ont la formule (1 + 6) 18, c'est-à-dire qu'ils sont constitués par sept monofilaments, chaque filament ayant un diamètre de 0,18 mm (180 micromètres). Un filament orienté pratiquement dans la direction de l'axe d'assemblage sert d'âme, les six autres monofilaments sont enroulés en hélice sous forme d'une couche autour de l'âme, l'angle aigu que fait chaque monofilament de cette couche avec l'axe de l'assemblage étant d'environ 6°, le diamètre de l'assemblage étant d'environ 540 $\mu$m, et chacun des monofilaments étant pratiquement dépourvu de torsion sur lui-même.

Les câblés utilisés sont de deux types :

Type A : Les monofilaments sont en poly(paraphénylène téréphtalamide) obtenu à partir de dichlorure de téréphtaloyle et de paraphénylène diamine;

Type B : Les monofilaments sont en copolyamide aromatique, ce copolyamide étant obtenu à partir des monomères suivants : dichlorure de téréphtaloyle, paraphénylène diamine (PPDA), 1,5-naphtylène diamine (NDA), avec 3 moles de NDA pour 100 moles de diamines.

Les caractéristiques moyennes des monofilaments et les caractéristiques des câblés sont données dans le tableau 1.

Tableau 1

| | Type A | Type B |
|---|---|---|
| **Monofilament** | | |
| Titre (tex) | 36,4 | 36,3 |
| Diamètre ($\mu$m) | 180 | 180 |
| Ténacité (cN/tex) | 149 | 121 |
| Module initial (cN/tex) | 5300 | 4570 |
| Masse volumique (g/cm$^3$) | 1,43 | 1,42 |
| Allongement à la rupture (%) | 3,7 | 3,2 |
| **Câblés** | | |
| Ténacité (cN/tex) | 140 | 109 |
| Module sécant (cN/tex) | 4600 | 3820 |
| Allongement à la rupture (%) | 3,9 | 3,4 |

Le tableau 2 suivant donne les indices attribués aux câblés en fonction du type de monofilament et du traitement subi par les câblés.

Tableau 2

| | Type A | Type B |
|---|---|---|
| **Essais conformes à l'invention** (traitement au plasma) | | |
| 1er traitement d'enduction | A1 | B1 |
| 2e traitement d'enduction | A2 | B2 |
| **Essais non conformes à l'invention** (pas de traitement au plasma) | | |
| 1er traitement d'enduction | $(A1)_o$ | $(B1)_o$ |
| 2e traitement d'enduction | $(A2)_o$ | $(B2)_o$ |

Dans les essais conformes à l'invention, les câblés ont subi un traitement au plasma avant le traitement d'enduction, les conditions du traitement au plasma étant les suivantes : gaz du plasma : oxygène ; puissance de l'appareil : 2500 watts ; pression du gaz : 150 millitorrs (20 Pa) ; temps de contact avec le plasma : 30 minutes. Dans les essais non conformes à l'invention, les câblés ont subi directement le traitement d'enduction, sans traitement préalable au plasma.

Les câblés ainsi obtenus, conformément à l'invention ou non, sont ensuite soumis au test d'adhésion décrit au § 9 du chapitre I. Les résultats obtenus sont donnés dans le tableau 3. Dans ce tableau 3, les valeurs d'arrachement sont prises arbitrairement égales à 100 pour les câblés ayant subi directement le traitement d'enduction sans traitement préalable au plasma, et les valeurs d'arrachement pour les câblés conformes à l'invention (traitement au plasma, puis traitement d'enduction) sont ramenés à cette base 100, par rapport au câblé correspondant, le tableau 3 donnant donc des valeurs relatives.

Tableau 3

| Indice du câblé | Force d'arrachement par brin |
|---|---|
| Conformes à l'invention | |
| A1 | 128,5 |
| B1 | 136,4 |
| A2 | 144,6 |
| B2 | 138,0 |
| Non conformes à l'invention | |
| $(A1)_o$ | 100 |
| $(B1)_o$ | 100 |
| $(A2)_o$ | 100 |
| $(B2)_o$ | 100 |

Le tableau 4 d'autre part donne les valeurs de $W_{SL}$ pour les monofilaments de types A et B avant et après traitement au plasma.

TABLEAU 4

| Monofilament | Valeur de $W_{SL}$ ($mJ/m^2$) |
|---|---|
| Avant traitement au plasma | |
| A | 99,0 |
| B | 118,1 |
| Après traitement au plasma | |
| A | 123,5 |
| B | 135,2 |

La comparaison des forces d'arrachement du tableau 3 entre les câblés conformes à l'invention, qui ont subi le traitement au plasma, et les câblés de même type, ayant subi le même traitement d'enduction, mais sans traitement au plasma, montre que l'invention permet d'obtenir les augmentations suivantes, pour les forces d'arrachement :

28,5 % pour les câblés A1 par rapport aux câblés $(A1)_o$
44,6 % pour les câblés A2 par rapport aux câblés $(A2)_o$
36,4 % pour les câblés B1 par rapport aux câblés $(B1)_o$
38,0 % pour les câblés B2 par rapport aux câblés $(B2)_o$

Cette augmentation est substantielle, en particulier, pour les câblés A2, B2 qui ont subi le deuxième traitement d'enduction (premier bain comportant des isocyanates).

Ces augmentations restent du même ordre de grandeur lorsqu'on change le gaz lors du traitement au plasma (utilisation par exemple d'argon, d'azote, d'anhydride sulfureux $SO_2$), lorsqu'on modifie la puissance du dispositif à plasma (par exemple entre 500 et 5000 watts), lorsqu'on modifie la durée de traitement au plasma (par exemple entre 10 minutes et 60 minutes) ou lorsqu'on modifie la pression du gaz de plasma par exemple entre 50 et 500 millitorrs. Les caractéristiques du traitement au plasma ne sont donc pas critiques.

Dans les exemples de réalisation conformes à l'invention on utilisait un traitement au plasma à pression réduite mais l'invention s'applique au cas où on utilise un traitement au plasma à pression atmosphérique, aussi appelé traitement corona.

L'invention s'applique notamment aux monofilaments aramides ayant les caractéristiques préférentielles données dans la demande PCT/CH90/00155 précitée, en particulier les caractéristiques suivantes :
- l'allongement à la rupture Ar est supérieur à 2 ;
- les monofilaments vérifient au moins une des relations suivantes :
  $T \geq 190-D/3$ ; $Mi \geq 6800-10D$ ; $Ar > 3$ ;

Dans ces relations, Ar est exprimé en %, T et Mi sont exprimés en cN/tex, et D est exprimé en $\mu$m.

Bien entendu, l'invention n'est pas limitée aux exemples de réalisation précédemment décrits. C'est ainsi que dans les exemples précédemment décrits, les traitements au plasma et les traitements d'enductions étaient effectués sur des assemblages de monofilaments, mais l'invention s'applique au cas où au moins un de ces traitements est effectué sur un monofilament isolé, c'est-à-dire ne faisant pas partie d'un assemblage.

**Revendications**

1. Procédé pour traiter au moins une fibre aramide de façon à favoriser son adhésion à du caoutchouc, caractérisé par les points suivants :
   a) on utilise au moins un monofilament vérifiant les relations suivantes :
   $1,7 \leq Ti \leq 260$ ;
   $40 \leq D \leq 480$ ;
   $T \geq 170-D/3$ ;
   $Mi \geq 2000$ ;
   Ti étant le titre en tex, D étant le diamètre en $\mu$m (micromètre), T étant la ténacité en cN/tex, Mi étant le module initial en cN/tex ;
   b) on soumet ce monofilament à un traitement de surface par plasma de telle sorte que le monofilament ait une mouillabilité par l'eau vérifiant la relation $W_{SL} \geq 120$
   $W_{SL}$ étant le travail réversible d'adhésion solide-liquide exprimé en mJ/m$^2$.

2. Procédé selon la revendication 1, caractérisé en ce que le traitement de surface est réalisé à l'aide d'un plasma à pression réduite.

3. Procédé selon l'une quelconque des revendications 1 ou 2, caractérisé en ce que l'on soumet en outre le monofilament à un traitement d'enduction, après le traitement de surface.

4. Procédé selon la revendication 3, caractérisé en ce que le traitement d'enduction est réalisé avec deux bains successifs, un traitement thermique du monofilament étant effectué après chaque bain.

5. Procédé selon la revendication 4, caractérisé en ce que le premier bain est à base de résine époxy et le deuxième bain est à base d'une résine phénolique et d'un latex.

6. Procédé selon la revendication 4, caractérisé en ce que le premier bain est à base d'isocyanate et le deuxième bain est à base d'une résine phénolique et d'un latex.

7. Monofilament obtenu par le procédé selon l'une quelconque des revendications 1 à 6.

8. Monofilament enduit obtenu par le procédé conforme à l'une quelconque des revendications 3 à 6.

9. Monofilament aramide caractérisé par les relations suivantes :
   $1,7 \leq Ti \leq 260$ ;
   $40 \leq D \leq 480$ ;
   $T \geq 170-D/3$ ;
   $Mi \geq 2000$ ;
   $W_{SL} \geq 120$ ;

## EP 0 564 571 B1

Ti étant le titre en tex, D étant le diamètre en $\mu$m (micromètre), T étant la ténacité en cN/tex, Mi étant le module initial en cN/tex, $W_{SL}$ étant le travail réversible d'adhésion solide-liquide exprimé en mJ/m$^2$.

**10.** Monofilament selon la revendication 9, caractérisé en ce qu'il comporte un revêtement organique.

**11.** Monofilament selon la revendication 10, caractérisé en ce que le revêtement comporte au moins une résine choisie dans le groupe constitué par les résines époxy, les résines phénoliques.

**12.** Assemblage comportant au moins un monofilament conforme à l'une quelconque des revendications 7 à 11.

**13.** Article renforcé avec au moins un monofilament conforme à l'une quelconque des revendications 7 à 11 ou au moins un assemblage conforme à la revendication 12.

**14.** Procédé pour réaliser un article, caractérisé en ce qu'on met au moins un monofilament conforme à l'une quelconque des revendication 7 à 11, ou au moins un assemblage conforme à la revendication 12, au contact d'une composition de caoutchouc.

**15.** Procédé selon la revendication 14, caractérisé en ce qu'on provoque ensuite la vulcanisation de la composition de caoutchouc.

**16.** Article obtenu selon le procédé conforme à l'une quelconque des revendications 14 ou 15, caractérisé en ce qu'il est une enveloppe de pneumatique.

## Claims

**1.** A method of treating at least one aramid fibre in such a manner as to promote its adhesion to rubber, characterised by the following features:
(a) at least one monofilament is used which satisfies the following relationships:
$1.7 \leq Ti \leq 260$;
$40 \leq D \leq 480$;
$T \geq 170-D/3$;
$Mi \geq 2000$;
Ti being the linear density in tex, D being the diameter in $\mu$m (micrometres), T being the tenacity in cN/tex, and Mi being the initial modulus in cN/tex;
(b) this monofilament is subjected to a surface treatment by plasma in such a manner that the monofilament has a wettability by water which satisfies the relationship $W_{SL} \geq 120$,
$W_{SL}$ being the reversible solid-liquid adhesion work expressed in mJ/m$^2$.

**2.** A method according to Claim 1, characterised in that the surface treatment is carried out by means of a plasma at reduced pressure.

**3.** A method according to any one of Claims 1 or 2, characterised in that the monofilament is furthermore subjected to a coating treatment after the surface treatment.

**4.** A method according to Claim 3, characterised in that the coating treatment is carried out with two successive baths, a thermal treatment of the monofilament being effected after each bath.

**5.** A method according to Claim 4, characterised in that the first bath has a base of epoxy resin and the second bath has a base of a phenol resin and a latex.

**6.** A method according to Claim 4, characterised in that the first bath has a base of isocyanate and the second bath has a base of a phenol resin and a latex.

**7.** A monofilament obtained by the method according to any one of Claims 1 to 6.

**8.** A coated monofilament obtained by the method according to any one of Claims 3 to 6.

10

9. An aramid monofilament characterised by the following relationships:

$1.7 \leq Ti \leq 260$;

$40 \leq D \leq 480$;

$T \geq 170\text{-}D/3$;

$Mi \geq 2000$;

$W_{SL} \geq 120$;

Ti being the linear density in tex, D being the diameter in $\mu$m (micrometres), T being the tenacity in cN/tex, Mi being the initial modulus in cN/tex, and $W_{SL}$ being the reversible solid-liquid adhesion work expressed in mJ/m$^2$.

10. A monofilament according to Claim 9, characterised in that it has an organic coating.

11. A monofilament according to Claim 10, characterised in that the coating comprises at least one resin selected from the group consisting of epoxy resins and phenol resins.

12. An assemblage comprising at least one monofilament according to any one of Claims 7 to 11.

13. An article reinforced with at least one monofilament according to any one of Claims 7 to 11 or at least one assemblage according to Claim 12.

14. A method of producing an article, characterised in that at least one monofilament in accordance with any one of Claims 7 to 11, or at least one assemblage according to Claim 12, is placed in contact with a rubber composition.

15. A method according to Claim 14, characterised in that the rubber composition is then vulcanised.

16. An article obtained by the method according to any one of Claims 14 or 15, characterised in that it is a tyre.

**Patentansprüche**

1. Verfahren zur Behandlung von mindestens einer Aramidfaser zur Verbesserung ihrer Adhäsion an Kautschuk, gekennzeichnet durch folgende Merkmale:

a) es wird mindestens ein Monofilament verwendet, das die folgenden Beziehungen erfüllt:

$1,7 \leq Ti \leq 260$;

$40 \leq D \leq 480$;

$T \geq 170\text{-}D/3$;

$Mi \geq 2000$,

worin bedeuten: Ti den Titer in tex, D den Durchmesser in $\mu$m (Mikrometer), T die Reißrfestigkeit in cN/tex, und Mi den Anfangsmodul in cN/tex;

b) dieses Monofilament wird einer solchen Oberflächenßehandlung mit einem Plasma unterzogen, daß das Monofilament eine Benetzbarkeit mit Wasser aufweist, die die Beziehung $W_{SL} \geq 120$ erfüllt, worin

$W_{SL}$ die reversible Fest-Flüssig-Ashäsionsenergie, ausgedrückt in mJ/m$^2$, bedeutet.

2. Verfahren nach Anspruch 1, dadurch gekennzeichnet, daß die Oberflächenbehandlung mit einem Plasma bei vermindertem Druck durchgeführt wird.

3. Verfahren nach Anspruche 1 oder 2, dadurch gekennzeichnet, daß das Monofilament nach der Oberflächenbehandlung zusätzlich einer Beschichtungsbehandlung unterzogen wird.

4. Verfahren nach Anspruch 3, dadurch gekennzeichnet, daß die Beschichtungsbehandlung mit zwei aufeinanderfolgenden Bädern durchgeführt wird, wobei eine thermische Behandlung des Monofilaments nach jedem Bad durchgeführt wird.

5. Verfahren nach Anspruch 4, dadurch gekennzeichnet, daß das erste Bad ein Bad auf Epoxyharzbasis und das zweite Bad einBad auf der Basis eines Phenolharzes und eines Latex ist.

6. Verfahren nach Anmspruch 4, dadurch gekennzeichnet, daß das erste Bad ein Bad auf Isocyanatbasis und das zweite Bad ein Bad auf der Basis eines Phenolharzes und eines Latex ist.

7. Monofilament, das nach dem Verfahren nach einem der Ansprüche 1 bis 6 erhalten ist.

8. Beschichtetes Monofilament, das nach dem Verfahren nach einem der Ansprüche 3 bis 6 erhalten ist.

9. Aramidmonofilament, gekennzeichnet durch die folgenden Beziehungen:
$1{,}7 \leq Ti \leq 260$;
$40 \leq D \leq 480$;
$T \geq 170\text{-}D/3$;
$Mi \geq 2000$,
$W_{SL} \geq 120$,
worin bedeuten: Ti den Titer in tex, D den Durchmesser in $\mu$m (Mikrometer), T die Reißfestigkeit in cN/tex, Mi den Anfangsmodul in cN/tex und $W_{SL}$ die reversible Fest-Flüssig-Adhäsionsenergie, ausgedrückt in mJ/m$^2$.

10. Monofilament nach Anspruch 9, dadurch gekennzeichnet, daß es einen organischen Überzug aufweist.

11. Monofilament nach Anspruch 10, dadurch gekennzeichnet, daß der Überzug mindestens ein Harz enthält, das unter den Epoxyharzen und den Phenolharzen ausgewählt ist.

12. Verbundmaterial, das mindestens ein Monofilament nach einem der Ansprüche 7 bis 11 enthält.

13. Formkörper, der mit mindestens einem Monofilament nach einem der Ansprüche 7 bis 11 oder mit mindestens einem Verbundmaterial nach Anspruch 12 verstärkt ist.

14. Verfahren zur Herstellung eines Formkörpers, dadurch gekennzeichnet, daß mindestens ein Monofilament nach einem der Ansprüche 7 bis 11 oder mindestens ein Verbundmaterial nach Anspruch 12 mit einer Kautschukzusammensetzung in Kontakt gebracht wird.

15. Verfahren nach Anspruch 14, dadurch gekennzeichnet, daß die Kautschukzusammensetzung anschließend vulkanisiert wird.

16. Formkörper, erhalten nach dem Verfahren nach einem der Anspruch 14 oder 15, dadurch gekennzeichnet, daß es sich um einen Luftreifen handelt.